# EUROPEAN PATENT APPLICATION

(11) **EP 2 818 759 A1**
(43) Date of publication of application: **31.12.2014**
(21) Application number: 12869576.4
(22) Date of filing: 24.02.2012
(51) Int. Cl.: F16H 3/34, F02B 67/04

(54) **POWER TRANSMISSION DEVICE**

(71) Applicant: Toyota Jidosha Kabushiki Kaisha, Toyota-shi, Aichi 471-8571 (JP)
(72) Inventor: SUNADA, Hirotaka, Toyota-shi Aichi 471-8571 (JP)
(74) Representative: TBK
(86) International application number: PCT/JP2012/054532
(87) International publication number: WO 2013/125024

(57) **Abstract**

A water pump 1 has a pulley 4 provided with an internally toothed gear 4d and an externally toothed gear 4e that is further in than the internally toothed gear 4d in a radial direction, a shaft gear 5 involved in transmission of power to and from the pulley 4, and a transmission mechanism 6 that mediates transmission of power between the pulley 4 and the shaft gear 5. The transmission mechanism 6 includes gears 6a and 6b that set a transmission gear ratio to a first value when the transmission mechanism 6 engages with the internally toothed gear 4d and set the transmission gear ratio to a second value different from the first value when the transmission mechanism 6 engages with the externally toothed gear 4e, a rocker arm 6e that switches an engagement object of the gears 6a and 6b on a pulley 4 side between the internally toothed gear 4d and the externally toothed gear 4e, and a DC motor 6f that drives the rocker arm 6e.

## Description

### [TECHNICAL FIELD]

The present invention relates to power transmission devices.

### [BACKGROUND ART]

As power transmission devices, for example, there is known a water pump driven by engine power. In this regard, there have been proposed various methods for transmission of power in the water pump. In Patent Document 1, disclosed is a hybrid pump for use in automotive vehicles designed to drive a liquid pressure pump by the power of an engine or that of an electric motor through a planet gear. The hybrid pump for use in automotive vehicles is configured to control the number of revolutions of the liquid pressure pump by rotating the electric motor in the direction opposite to that of the engine.

In Patent Document 2, there is disclosed a clutch water pump in which an electronic clutch is applied to the water pump. In Patent Document 3, there is disclosed a water pump of variable flow rate type configured to carry out transmission of rotation from a drive side rotator to a driven side rotator in a non-contact state. In Patent Document 4, there is disclosed a water pump drive mechanism for engines in which a fluid coupling is interposed between a pump shaft of the water pump and a water pump pulley.

Further, as to transmission mechanisms, arts that are considered as being relative to the present invention are disclosed in Patent Documents 5 and 6, for example. In Patent Document 5, disclosed is a power change device of a tape recorder configured so that a rotation gear that rotates about the shaft by a given angle is engaged with a transmission gear, and is selectively engaged with a first gear or a relay gear. In Patent Document 6, there is disclosed a non-stage transmission of frictional wheel type configured to perform non-stage change of speed by controlling the swing position of a shift arm that rotatably supports a support shaft of a frictional wheel at a fee end and changing the contact position of the frictional wheel to a concave cone surface of a disk.

### [PRIOR ART DOCUMENTS]

### [PATENT DOCUMENTS]

[Patent Document 1] Japanese Laid-Open Patent Publication No. 2004-116361
[Patent Document 2] Japanese Laid-Open Patent Publication No. 2011-47394
[Patent Document 3] International Publication Pamphlet 2008/078774
[Patent Document 4] Japanese Laid-Open Patent Publication No. 2001-342832
[Patent Document 5] Japanese Laid-Open Patent Publication No. 6-295493
[Patent Document 6] Japanese Laid-Open Patent Publication No. 2002-323106

### [SUMMARY OF THE INVENTION]

### [PROBLEMS TO BE SOLVED BY THE INVENTION]

In power transmission, power can be transmitted as done by the hybrid pump for use in automotive vehicles disclosed in Patent Document 1. In this case, the rotation of the electric motor in the direction opposite to that of the engine makes it possible to control the number of revolutions of the liquid pressure pump. That is, transmission of power is made variable. However, this case may be disadvantageous to the durability of the electric motor in consideration of the usage of the electric motor such as a use of the electric motor for driving the liquid pressure pump and a use of driving in the direction opposite to that of the engine and in further consideration of the load applied to the electric motor in use. Further, the above case may have a cost disadvantage due to the complex structure and other disadvantages in terms of miniaturization, power consumption and cost due to the necessity of the electric motor capable of driving the liquid pressure pump.

The present invention has been made taking the above problems into consideration and has an object of providing a power transmission device capable of varying transmission of power and having an advantageous structure in terms of miniaturization and so on.

### [MEANS FOR SOLVING THE PROBLEMS]

The present invention for solving the above problems is a power transmission device comprising: a first rotator provided with an internally toothed gear and an externally toothed gear that is further in than the internally toothed gear in a radial direction; a second rotator in which transmission of power from and to the first rotator is carried out; and a transmission mechanism that mediates transmission of power between the first rotator and the second rotator, the transmission mechanism including: a transmission part that sets a transmission gear ratio to a first value when the transmission mechanism engages with the internally toothed gear and sets the transmission gear ratio to a second value different from the first value when the transmission mechanism engages with the externally toothed gear, a swing part that switches an engagement object of the transmission part on a first rotator side between the internally toothed gear and the externally toothed gear, and a drive part that drives the swing part.

The present invention may be configured to comprise, as the transmission part, a first gear that selectively engages with the internally toothed gear or the externally toothed gear, and a second gear that engages with the first gear and transmits power from one of the first and second rotators to the other, wherein the swing portion swings the first gear about a rotation center of the second gear.

The present invention may be configured so that the drive part drives the swing part to switch a power transmission state of the transmission part between a first state having an engagement with the internally toothed gear and a second state having an engagement with the externally toothed gear.

The present invention may be configured so that the drive part drives the swing part to switch the power transmission state of the transmission part between the first state, the second state and a third state having a disengagement from the internally toothed gear and the externally toothed gear.

The present invention may be configured so that wherein the transmission mechanism is a speed reduction mechanism that sets the first value to a value that makes it possible to equalize the number of revolutions of the first rotator and that of the second rotator and sets the second value to a value smaller than the first value, and the transmission mechanism being realized as a water pump driven by engine power.

### [EFFECTS OF THE INVENTION]

According to the present invention, it is possible to vary the transmission of power and achieve a structure that is advantageous to miniaturization and so on.

### [BRIEF DESCRIPTION OF THE DRAWINGS]

FIG. 1 is a schematic diagram of a structure of a water pump;
FIG. 2 is a diagram of main parts of the water pump;
FIG. 3 is a diagram that illustrates the main parts of the water pump in a first state;
FIG. 4 is a diagram that illustrates the main parts of the water pump in a second state;
FIG. 5 is a diagram that illustrates the main parts of the water pump in a third state;
FIG. 6 is a diagram that illustrates a power transmission mechanism of the water pump;
FIG. 7 is a diagram that illustrates a first exemplary variation of the water pump; and
FIG. 8 is a diagram that illustrates a second exemplary variation of the water pump.

### [MODES FOR CARRYING OUT THE INVENTION]

A description is given of embodiments of the invention in conjunction with the drawings.

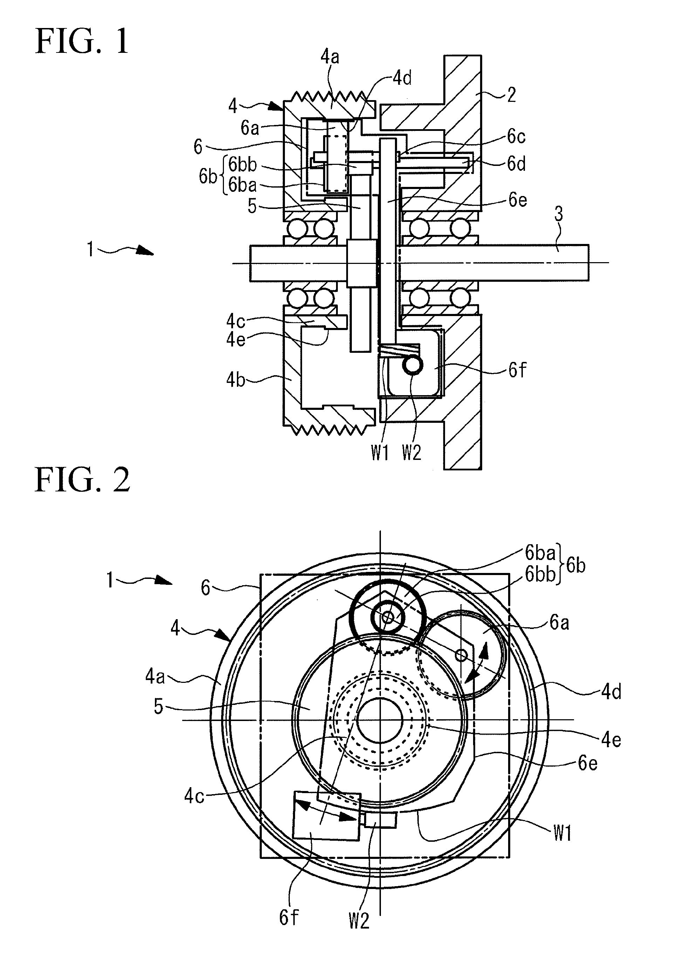

FIG. 1 is a schematic diagram of a structure of a water pump 1. FIG. 2 is a diagram that illustrates main parts of the water pump 1. In FIG. 2, there are illustrated a pulley 4, a shaft gear 5 and a transmission mechanism 6 viewed from a body 2 side in the axial direction, which are main parts of the water pump 1. Further, in FIG. 2, an outer appearance of a rocker arm 6e out of parts of the transmission mechanism 6 is depicted by a two-dot broken line.

The water pump 1 has the body 2, an impeller shaft 3, the pulley 4, the shaft gear 5 and the transmission mechanism 6. The water pump 1 is a power transmission device and is driven by engine power to pump cooling water of the engine. The body 2 is a main body and is a base member of the water pump 1. The impeller shaft 3, which is a drive shaft, is attached to the body 2 so that a bearing is interposed therebetween. The center axis of the impeller shaft 3 corresponds to the center axis of rotation of the water pump 1.

The pulley 4 is a first rotator, and is, more specifically, a drive-side rotator. The pulley 4 is attached to the impeller shaft 3 so that a bearing is interposed therebetween. Thus, the pulley 4 is concentric to the center axis of the impeller shaft 3. The pulley 4 has a first cylinder part 4a, a wall part 4b and a second cylinder part 4c. The first cylinder part 4a is provided so as to be opened on the body 2 side, which is an end side of the water pump 1. The wall part 4b is provided so as to form a bottom wall part of the first cylinder part 4a on an opposite side to the body 2, which opposite side is an opposite-end side of the water pump 1. The second cylinder part 4c is provided so as to be opened in the center of the wall part 4b and extend toward the body 2 side. The second cylinder part 4c is a bearing hold part, and the pulley 4 has the second cylinder part 4c within the cylinder of the first cylinder part 4a. The cylinder parts 4a and 4c are both concentric to the center axis of the impeller shaft 3.

An internally toothed gear 4d is formed in the first cylinder part 4a. An externally toothed gear 4e is formed in the second cylinder part 4c. The externally toothed gear 4e is further in than the internally toothed gear 4d in the radial direction. The externally toothed gear 4e is provided so as to face the internally toothed gear 4d. The gears 4d and 4e are provided so as to be concentric to the center axis of the impeller shaft 3 analogously to the cylinder parts 4a and 4c. The gears 4d and 4e are realized by parts of the pulley 4. Engine power can be transmitted by winding a belt capable of transmission of engine power onto an outer circumference of the first cylinder part 4a, for example.

The shaft gear 5 is a second rotator, and is configured to transmit power to or from the pulley 4. In this regard, more specifically, the shaft gear 5 is a driven-side rotator to which power is transmitted from the pulley 4. The shaft gear 5 has a ring shape, and is coupled to the impeller shaft 3 in a state in which the impeller shaft 3 is inserted into the shaft gear 5. With this, the shaft gear 5 is concentric to the center axis of the impeller shaft 3. The impeller shaft 3 and the shaft gear 5 are coupled with each other by key coupling or spline coupling, for example. The shaft gear 5 has gear teeth on the outer circumference, and power is transmitted to the shaft gear 5 from the pulley 4 through the transmission mechanism 6.

The transmission mechanism 6 mediates the transmission of power between the pulley 4 and the shaft gear 5. The transmission mechanism 6 has a first gear 6a, a second gear 6b, a first shaft member 6c, a second shaft member 6d, the rocker arm 6e, and a DC motor 6f. The gears 6a and 6b are transmission parts, and are provided between the cylinder parts 4a and 4c within the pulley 4. The gear ratio is set to a first value when the gears 6a and 6b are engaged with the internally toothed gear 4d, and is set to a second value different from the first value when the gears 6a and 6b are engaged with the externally toothed gear 4e.

In this regard, the transmission mechanism 6 selects, as the first value, a value that makes it possible to equalize the number of revolutions of the pulley 4 and that of the shaft gear 5 (here specifically 1), and selects, as the second value, a value that is smaller than the first value. With this setting, the transmission mechanism 6 is configured to be a speed reduction mechanism. The first gear 6a is rotatably attached to the first shaft member 6c, and the second gear 6b is rotatably attached to the second shaft member 6d. The first shaft member 6c is attached to the rocker arm 6e, and the second shaft member 6d is attached to the body 2.

The rocker arm 6e is a swing part, and is provided between the body 2 and the shaft gear 5 in the axial direction. The rocker arm 6e has a plate shape. Although illustration is omitted, the rocker arm 6e has a shape that makes it possible to avoid interference with the impeller shaft 3 when the rocker arm 6e swings. The shape that makes it possible to avoid the interference with the impeller shaft 3 may be a shape having a hole or cutout that makes it possible to avoid the interference with the impeller shaft 3. The rocker arm 6e has an outer shape having a size that allows the rocker arm 6e to be placed within the range defined by the outer diameter of the pulley 4 (more specifically, the inner diameter of the first cylinder part 4a).

The rocker arm 6e switches, between the internally toothed gear 4d and the externally toothed gear 4e, the object with which the gears 6a and 6b on the pulley 4 side engage. In this regard, more specifically, the first gear 6a out of the gears 6a and 6b is provided so as to selectively engage with the internally toothed gear 4d or the externally toothed gear 4e. The second gear 6b is provided so as to engage with the first gear 6a, and power is transmitted from one of the first gear 6a and the shaft gear 5 to the other (here specifically from the first gear 6a to the shaft gear 5).

In the transmission of power, the second gear 6b has a large-size gear part 6ba and a small-size gear part 6bb that are concentric to each other along the axial direction. The large-size gear part 6ba engages with the first gear 6a, and the small-size gear part 6bb engages with the shaft gear 5.

The rocker arm 6e is provided so as to swing the first gear 6a about the rotation center of the second gear 6b. In this regard, more specifically, the first gear 6a is attached to the rocker arm 6e through the first shaft member 6c, so that the first gear 6a selectively engages with the internally toothed gear 4d or the externally toothed gear 4e in accordance with the swing of the rocker arm 6e. The second gear 6b is attached to the body 2 through the second shaft member 6d so that the position of the rotation center is fixed. The swing part may be a combination part that includes, for example, the first shaft member 6c in addition to the rocker arm 6e.

The DC motor 6f is a drive part, and drives the rocker arm 6e. In this regard, the rocker arm 6e has an outer circumference part of an arc shape provided about the rotation center of the second gear 6b, and a worm wheel W1 on the outer circumference part. The DC motor 6f has a worm gear W2 that engages with the worm wheel W1 on the output shaft. The worm wheel W1 and the worm gear W2 are both provided on the opposite side to the second gear 6b viewed from the rotation center of the impeller shaft 3, and are positioned between the cylinder parts 4a and 4c. The worm gear W2 extends along the tangential direction of the worm wheel W1, and engages with the worm wheel W1.

With this, the DC motor 6f is provided so as to be capable of swinging the rocker arm 6e about the rotation center of the second gear 6b. More specifically, the DC motor 6f is attached to the body 2 on the opposite side to the second gear 6b viewed from the rotation center of the impeller shaft 3, and is positioned further in than the outer diameter of the pulley 4 in the radial direction (more specifically, the inner diameter of the first cylinder part 4a).

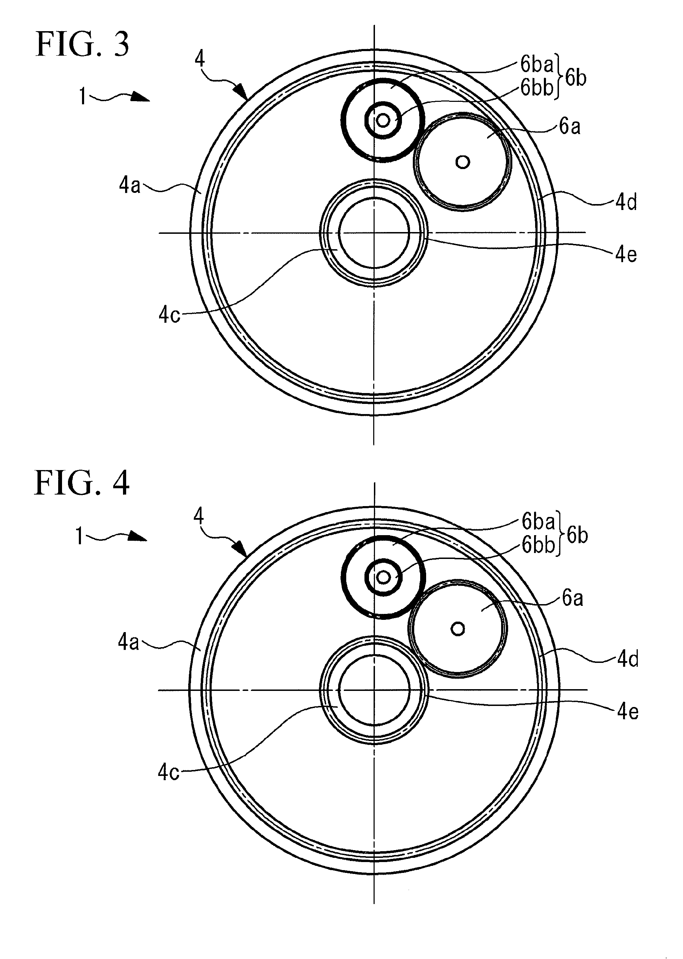

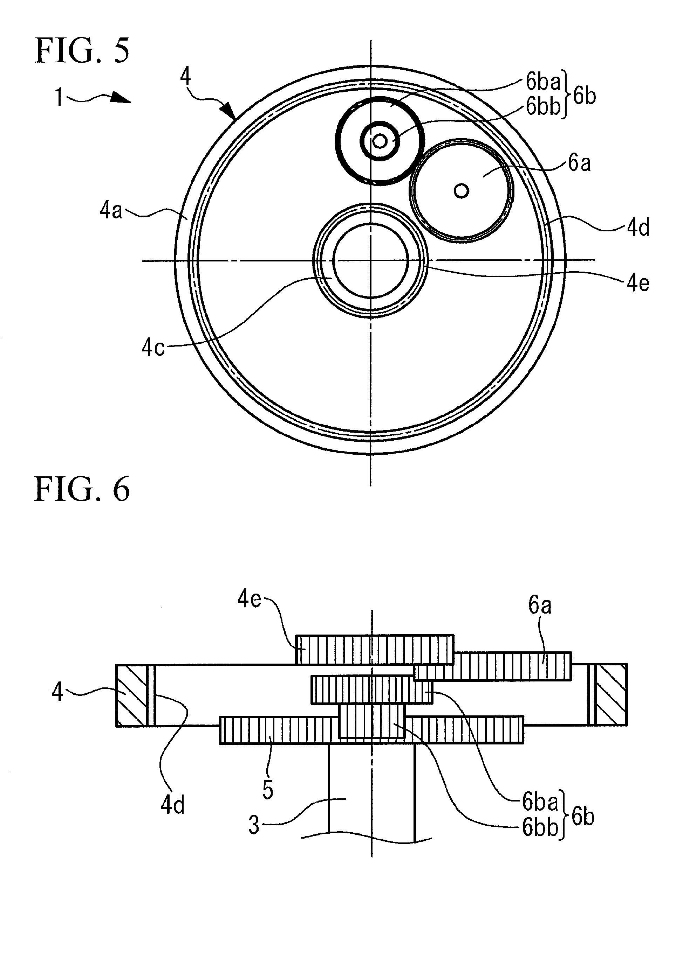

Next, a description is given of an operation of the water pump 1. FIG. 3 is a diagram of main parts of the water pump 1 in a first state. FIG. 4 is a diagram of the main parts of the water pump 1 in a second state. FIG. 5 is a diagram of the main parts of the water pump 1 in a third state. FIG. 6 is a diagram of a power transmission structure of the water pump 1. In FIGs. 3 through 5, the pulley 4 and the gears 6a and 6b are depicted as the main parts of the water pump 1. In FIG. 6, the internally toothed gear 4d is schematically illustrated for the purpose of facilitating easy understanding of the power transmission mechanism. Further, the externally toothed gear 4e and the first gear 6a are both illustrated in an offset state.

In the water pump 1, the DC motor 6f drives the rocker arm 6e to switch the power transmission state of the gears 6a and 6b between the first, second and third states. That is, the first state having engagement with the internally toothed gear 4d is selectable by engaging the first gear 6a with the internally toothed gear 4d. The second state having engagement with the externally toothed gear 4e is selectable by engaging the first gear 6a with the externally toothed gear 4e. The third state having disengagement from the internally toothed gear 4d and the externally toothed gear 4e is selectable by disengaging the first gear 6a from the internally toothed gear 4d and the externally toothed gear 4e.

In the first state, the first gear 6a and the internally toothed gear 4d engage with each other, whereby power is transmitted to the second gear 6b from the pulley 4 through the first gear 6a. The large-size gear part 6ba of the second gear 6b receives power transmitted from the first gear 6a, and the small-size gear part 6bb transmits power to the shaft gear 5. Thus, cooling water is discharged by the rotation of the inner shaft 3.

In the water pump 1, the numbers of teeth of the internally toothed gear 4d, the first gear 6a, the large-size gear part 6ba, the small-size gear part 6bb and the shaft gear 5 are selected so that the number of revolutions of the pulley 4 and that of the shaft gear 5 are equal to each other in the first state, that is, the transmission gear ratio is 1. With this, the first value is set to 1. For example, the first value of 1 may be achieved by setting the numbers of teeth of the internally toothed gear 4d, the first gear 6a, the large-size gear part 6ba, the small-size gear part 6bb and the shaft gear 5 are set to 10, 30, 25, 10 and 40, respectively. Specifically, the internally toothed gear 4d, the first gear 6a, the large-size gear part 6ba, the small-size gear part 6bb and the shaft gear 5 may be spur gears or helical gears, for example.

In the second state, the first gear 6a and the externally toothed gear 4e engage with each other, whereby power is transmitted to the second gear 6b from the pulley 4 through the first gear 6a. As in the case of the first state, power is transmitted to the shaft gear 5 from the second gear 6b. Thus, cooling water is discharged by the rotation of the inner shaft 3. In the water pump 1, the numbers of teeth of the externally toothed gear 4e, the first gear 6a, the large-size gear part 6ba, the small-size gear part 6bb and the shaft gear 5 are selected so that the number of revolutions of the shaft gear 5 is smaller than that of the pulley 4 in the second state, that is, the transmission gear ratio is smaller than 1. With this, the second value is set to a value smaller than the first value.

By setting the transmission gear ratio smaller than 1 in the second state, it is possible to achieve a small-quantity discharge in which a smaller quantity of cooling water than that in the first state is discharged. In this regard, a small-quantity discharge that is effective to the engine may be carried out by setting the second value equal to or larger than 1/5 of the first value and equal to or smaller than 1/2 thereof, for example. More specifically, the second value may be set to 0.28, which is equal to or smaller than 1/3 of the first value by setting the numbers of teeth of the externally toothed gear 4e, the first gear 6a, the large-size gear part 6ba, the small-size gear part 6bb and the shaft gear 5 are set to 28, 30, 25, 10 and 40, respectively.

In the third state, the first gear 6a is disengaged from the gears 4d and 4e, and power is not transmitted to the first gear 6a from the pulley 4. Thus, the inner shaft 3 does not rotate, and the discharge quantity of cooling water is zero. The third state is realized by rotating the worm gear W2 by a necessary angle from the first or second state by the DC motor 6f. In this regard, the third state is easily realized by using the worm wheel W1 and the worm gear W2 capable of setting a high transmission gear ratio as the power transmission mechanism between the rocker arm 6e and the DC motor 6f.

Next, the function and effect of the water pump 1 are described. The water pump 1 is capable of setting the transmission gear ratio to the first or second value by driving the rocker arm 6e by the DC motor 6f. No power is transmitted by disengaging the gears 6a and 6b from the gears 4d and 4e. That is, the water pump 1 is capable of transmitting power in the three stages including the case of non-transmission of power. Further, the water pump 1 capable of the power transmission may have advantageous structures in the following points.

That is, in the water pump 1, the structure of the pulley 4 having the gears 4d and 4e allows for compact storage of the gears 6a and 6b within the pulley 4. With this, the structure is advantageous to miniaturization. The structure of the gears 4d and 4e that are formed by parts of the pulley 4 has a cost advantage in terms of the number of parts. The structure of driving the rocker arm 6e allows for reduction in the load of the DC motor 6f from viewpoints of usage and load. With this, the structure is advantageous to miniaturization and power consumption in addition to durability. Further, the simple structure of the transmission mechanism 6 is advantageous to miniaturization and cost.

The water pump 1 capable of reducing the load of the DC motor 6f has the miniaturized driving part achieved by the use of the DC motor 6f, for example, which part allows for the arrangement of the DC motor 6f in the body 2 and the position of the DC motor 6f that is further in than the outer diameter of the pulley 4 in the radial direction. With this, the structure having the DC motor 6f in the proximity to the rocker arm 6e is advantageous to responsiveness in the variable transmission of power. Further, the structure is advantageous to miniaturization of the whole water pump 1.

In this regard, the structure of the rocker arm 6e having the size of the outer shape within the outer diameter of the pulley 4 in the radial direction is advantageous to miniaturization of the whole water pump 1 together with the arrangement of the DC motor 6f that is the drive part in the body 2 and the position of the DC motor 6f that is further in than the outer diameter of the pulley 4 in the radial direction.

In the variable transmission of power, the water pump 1 is specifically configured to have the gears 6a and 6b as the transmission parts and to have the rocker arm 6e arranged to swing the first gear 6a about the rotation center of the second gear 6b. With this, the setting of the transmission gear ratio to the first or second value and non-transmission of power are reasonably achieved by driving the shaft gear 5 by the DC motor 6f and switching the power transmission state of the gears 6a and 6b between the first, second and third states. Thus, specifically, the water pump 1 is suitably structured as described above.

The water pump 1 is capable to easily realizing the third state by using the worm wheel W1 and the worm gear W2 as the power transmission mechanism between the rocker arm 6e and the DC motor 6f. Thus, this makes it easy to apply the DC motor 6f having a compact size and a small power consumption to the drive part in addition to the reduced load of the DC motor 6f. The use of the worm wheel W1 and the worm gear W2 as the power transmission mechanism between the rocker arm 6e and the DC motor 6f makes it easy to arrange the compact DC motor 6f positioned further in than the outer diameter of the pulley 4.

As described above, the water pump 1 capable of variably transmitting power achieves the three-stage transmission of power by switching the power transmitting state of the gears 6a and 6b between the first, second and third states by actually driving the rocker arm 6e by the DC motor 6f. The switching of the power transmission state of the gears 6a and 6b between the first state and the second state by actually driving the rocker arm 6e by means of the DC motor 6f allows for power transmission with the transmission gear ratio switchable between the first value and the second value. The above structure of the water pump 1 may be formed by controlling the DC motor 6f by an electronic control device, for example.

In the water pump 1 advantageously structured as described above is suitable for miniaturization, the real structure of the gears 6a and 6b arranged within the pulley 4 is suitable for miniaturization. Further, the real structure of the gears 4d and 4e formed by parts of the pulley 4 is suitable for cost reduction. Further, the real structure of the drive part (here DC motor 6f) provided in the body 2 and positioned so as to be further in than the outer diameter of the pulley 4 in the radial direction is suitable for responsiveness and miniaturization. Furthermore, the real structure of the rocker arm 6e having the outer shape that allows for arrangement within the range defined by the outer diameter of the pulley 4 is suitable for miniaturization. Further, the real structure of the worm wheel W1 and the worm gear W2 used as the power transmission mechanism between the rocker arm 6e and the DC motor 6f and the structure of the drive part of the DC motor 6f are suitable for power consumption and miniaturization.

The water pump 1 is capable of transmitting power with a reduced number of revolutions of the shaft gear 5 with respect to the revolutions of the pulley 4 specifically by means of the speed reduction mechanism capable of setting the first value that makes it possible to equalize the number of revolutions of the pulley 4 and that of the shaft gear 5 and setting the second value smaller than the first value. In this regard, the water pump 1 capable of variably transmitting power with the transmission gear ratio being switched between the first value and the second value is suitable for reduction in the cooling loss by a limited quantity of discharge and increasing the thermal efficiency of the engine. Therefore, more specifically, the power transmission device is suitably the water pump 1 with the transmission mechanism 6 being the speed reduction mechanism.

The water pump 1 may be equipped with a failsafe mechanism capable of driving the rocker arm 6e so that the object with which the gears 6a and 6b on the pulley 4 side engage in case of a failure of the DC motor 6f is the internally toothed gear 4d or the externally toothed gear 4e (here preferably the internally toothed gear 4d).

In this regard, for example, the failsafe mechanism may have an urge member (for example, return spring) that urges the rocker arm 6e to engage the engagement object of the gears 6a and 6b on the pulley 4 side with the internally toothed gear 4d or the externally toothed gear 4e. In this case, the urge member is capable of driving the rocker arm 6e by setting the advance angle at which the output shaft can be driven without activation of a self lock of the DC motor 6f equal to or larger than a given value (for example, 4 °). Further, in this case, the rocker arm 6e can be controlled to an appropriate position under the function of the urge member by detecting the phase of the output shaft of the DC motor 6f when the DC motor 6f operates normally and by performing a feedback control to set the phase of the output shaft of the DC motor 6f to the given phase. The failsafe mechanism may be another appropriate one besides the above.

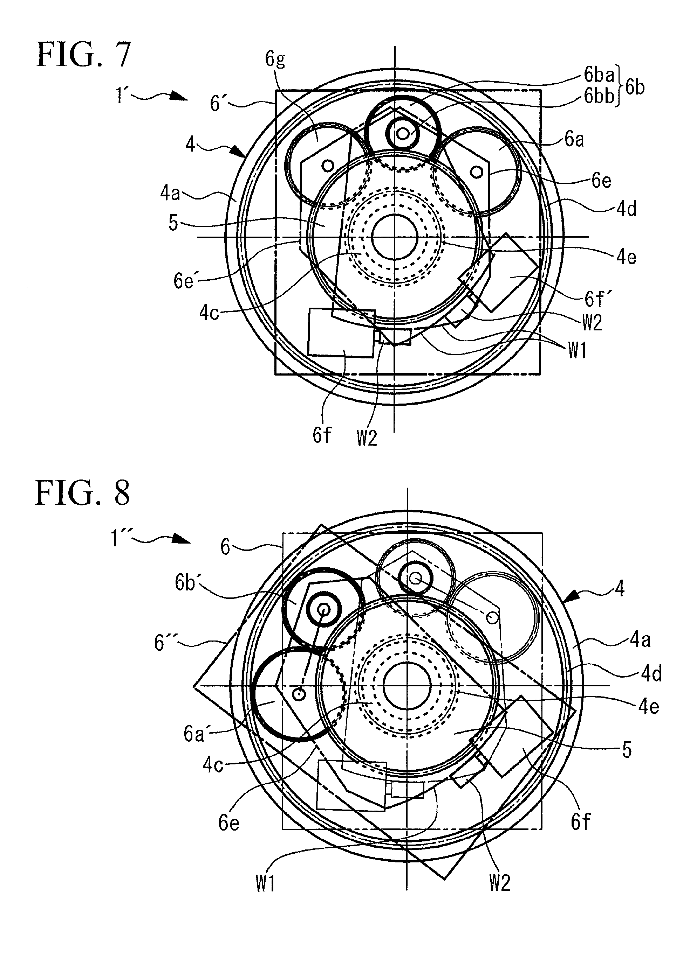

The water pump 1 may have exemplary structures as follows. FIG. 7 is a diagram of a first variation of the water pump 1. A water pump 1' is substantially the same as the water pump 1 except a transmission mechanism 6' that is substituted for the transmission mechanism 6. The transmission mechanism 6' is substantially the same as the transmission mechanism 6 except that the transmission mechanism 6' is further equipped with a third gear 6g, a rocker arm 6e', and a DC motor 6f'.

The third gear 6g selectively engages with the internally toothed gear 4d or the externally toothed gear 4e. The third gear 6g is provided so as to engage with the second gear 6b on the opposite side to the first gear 6a through the second gear 6b between the cylinder parts 4a and 4c. Thus, in the water pump 1', the second gear 6b further engages with the third gear 6g and power is transmitted from one of the third gear 6g and the shaft gear 5 to the other. In this regard, in the water pump 1', the gears 6a and 6b and the gears 6g and 6b are the transmission parts.

The rocker arm 6e' has a similar structure to the rocker arm 6e except that the engagement object of the gears 6g and 6b on the pulley 4 side is switched between the internally toothed gear 4d and the externally toothed gear 4e. The DC motor 6f' has a similar structure to the DC motor 6f except that the rocker arm 6e' is driven instead of the rocker arm 6e.

In the water pump 1', when the power transmission state of the gears 6a and 6b is the third state, the DC motor 6f' drives the rocker arm 6e', whereby the power transmission state of the gears 6a' and 6b is switched between fourth, fifth and sixth states described next. More specifically, when the third gear 6g is engaged with the internally toothed gear 4d, the fourth state having engagement with the internally toothed gear 4d is selectable. When the third gear 6g is engaged with the externally toothed gear 4e, the fifth state having engagement with the eternally toothed gear 4e is selectable. When the third gear 6g is positioned in disengagement state between the internally toothed gear 4d and the externally toothed gear 4e, the sixth state having disengagement from the internally toothed gear 4d and the externally toothed gear 4e is selectable. When the power transmission state of the gears 6g and 6b are the sixth state, the DC motor 6f drives the rocker arm 6e, whereby the power transmission state of the gears 6a and 6b is switched between the first, second and third states.

Thus, the water pump 1' is capable of more suitably changing the transmission of power than the water pump 1 because of the two mutually different transmission gear ratios achieved by performing the power transmission through the internally toothed gear 4d and the power transmission through the externally toothed gear 4e.

FIG. 8 is a diagram of a second variation of the water pump 1. A water pump 1" is substantially the same as the water pump 1 except that the water pump 1" is further equipped with a transmission mechanism 6". The transmission mechanism 6" is configured similarly to the transmission mechanism 6 except that the transmission mechanism 6" has a first gear 6a' and a second gear 6b' instead of the gears 6a and 6b, and the gears 6a' and 6b' realize transmission gear ratios different from those by the gears 6a and 6b. In FIG. 8, the structural parts of the transmission mechanism 6 are illustrated by thin lines. Thus, as in the case of the water pump 1', the water pump 1" is capable of more suitably changing the transmission of power than the water pump 1 because of the two mutually different transmission gear rations achieved by performing the power transmission through the internally toothed gear 4d and the power transmission through the externally toothed gear 4e.

The embodiments of the present invention have been described in detail. However, the present invention is not limited to the specifically described embodiments but includes various variations and changes within the scope of the present invention as claimed.

For example, in the above-described embodiments, the water pump 1 is the power transmission device. However, the present invention is not limited to the above, and the power transmission device may be an oil pump or compressor for air conditioner driven by the engine power, or an appropriate pump having a necessity of varying the flow rate such as a fuel pump or vacuum pump driven by the engine power. The power transmission device is not limited to the drive of the engine power but may be driven by another power.

In the above-described embodiments, a description has been given of the case where the pulley 4 that is the first rotator is the drive-side rotator, and the shaft gear 5 that is the second rotator is the driven-side rotator. However, the present invention is not limited to the above, but the first rotator may be the driven-side rotator and the second rotator may be the drive-side rotator, for example. In the above-described embodiments, a description has been given of the case where the transmission mechanism is the speed reduction mechanism. However, the present invention is not limited to the above but the transmission gear ratios realized by the transmission mechanism may include a value larger than 1, for example. In the above-described embodiment, a description has been given of the case where the DC motor 6f is the drive part. However, the present invention is not limited to the above, but the drive part may be an actuator that uses power such as oil pressure or negative pressure other than the DC motor.

### [DESCRIPTION OF LETTERS OR NUMERALS]

- water pump: 1, 1', 1"
- pulley: 4
- shaft gear: 5
- transmission mechanism: 6, 6', 6"
- rocker arm: 6e, 6e'
- DC motor: 6f, 6f'

## Claims

1. A power transmission device comprising:
a first rotator provided with an internally toothed gear and an externally toothed gear that is further in than the internally toothed gear in a radial direction;
a second rotator in which transmission of power from and to the first rotator is carried out; and
a transmission mechanism that mediates transmission of power between the first rotator and the second rotator,
the transmission mechanism including:
a transmission part that sets a transmission gear ratio to a first value when the transmission mechanism engages with the internally toothed gear and sets the transmission gear ratio to a second value different from the first value when the transmission mechanism engages with the externally toothed gear, a swing part that switches an engagement object of the transmission part on a first rotator side between the internally toothed gear and the externally toothed gear, and a drive part that drives the swing part.

2. The power transmission device of claim 1, comprising, as the transmission part, a first gear that selectively engages with the internally toothed gear or the externally toothed gear, and a second gear that engages with the first gear and transmits power from one of the first and second rotators to the other,
wherein the swing portion swings the first gear about a rotation center of the second gear.

3. The power transmission device of claim 1 or 2, wherein the drive part drives the swing part to switch a power transmission state of the transmission part between a first state having an engagement with the internally toothed gear and a second state having an engagement with the externally toothed gear.

4. The power transmission device of claim 3, wherein the drive part drives the swing part to switch the power transmission state of the transmission part between the first state, the second state and a third state having a disengagement from the internally toothed gear and the externally toothed gear.

5. The power transmission device of claim 1 or 2, wherein the transmission mechanism is a speed reduction mechanism that sets the first value to a value that makes it possible to equalize the number of revolutions of the first rotator and that of the second rotator and sets the second value to a value smaller than the first value, and
the transmission mechanism being realized as a water pump driven by engine power.
